# EUROPEAN PATENT SPECIFICATION

(11) **EP 1 896 342 B1**
(45) Date of publication and mention of the grant of the patent: **26.11.2014**
(21) Application number: 06741168.6
(22) Date of filing: 05.06.2006
(51) Int. Cl.: B65D 77/12, B29C 65/08, B29C 65/18, B31B 19/84, B65D 75/58, B65B 3/04

(54) **A SEALABLE CONTAINER, AND METHOD FOR SEALING A CONTAINER**
VERSIEGELBARER BEHÄLTER UND VERFAHREN ZUM VERSIEGELN EINES BEHÄLTERS
CONTENANT SCELLABLE ET PROCEDE PERMETTANT DE SCELLER UN CONTENANT

(30) Priority: 03.06.2005 AU 2005902887
(43) Date of publication of application: 12.03.2008
(73) Proprietor: Rapak Asia Pacific Limited, Onehunga, Auckland 1061 (NZ)
(72) Inventor: ANDERSON, Ian, Port Melbourne Victoria 3207 (AU)
(74) Representative: Grünecker, Kinkeldey, Stockmair & Schwanhäusser
(86) International application number: PCT/AU2006/000751
(87) International publication number: WO 2006/128246

(56) References cited:
- EP-A1- 0 007 685
- EP-A1- 0 072 699
- EP-A1- 0 236 107
- EP-A1- 0 271 242
- WO-A1-96/20868
- GB-A- 2 248 599
- US-A- 3 231 444
- US-A- 4 063 990
- US-A- 4 916 885

## Description

### Field of the invention

The present invention relates to a sealable container, and to a method of sealing such a container. In particular, the invention relates to an aseptically sealable container, as well as to an aseptic seal for said container and an associated aseptic packaging fitment.

### Background of the invention

Filling of pre-sterilised containers in an aseptic manner is known and various systems are employed which utilise different filling apparatus, different containers, and different sterilisation techniques. Typically, the container to be filled is produced in such a way as to ensure that the interior of the container is sterilised during manufacture. During the filling procedure, an inlet into the container is opened and a filling nozzle is used to fill the container with flowable material. The inlet is then sealed to thereby contain the flowable material within the container until dispensing is required. The resealing of the container after it is filled must be done in such a way that a proper seal is achieved so that contamination does not take place during subsequent storage and transportation.

Several related art patents have addressed the aforementioned problems such as the devices and methods disclosed in US 4,257,535 (Mellett), US 4,672,688 (Kalkipsakis) and US 4,805,378 (Anderson), each of which describe systems providing a sealable container having a filling port which is sealed from within the container.

US 4,257,535 and US 4,672,688 describe a container having an internal flap integral with the wall of the container. Once the container is filled, the filling port is sealed by urging the flap against a flange on the port, and heat sealing the flap to the filling port via a heating device located outside of the container so as to form an annular heat seal.

US 4,805,378 describes a similar device and method. In particular, the prior art in document US 4,805,378 discloses a container for storage and dispensing of fluids, said container comprising collapsible front and rear walls defining a chamber, having a gland defining a fluid passage carried on the front wall for allowing the passage of fluids into the chamber, wherein the gland extends through an aperture defined in the collapsible front wall of the container, and includes a base flange located within the container, and wherein the glands includes a sealing land within the container for sealingly engaging a heat sealable membrane along the continuous seal upon the application of heat through the rear wall of the container.

Further to this, document WO 96/20868 discloses a flexible filling bag container including an inlet collar having an inlet sealed by a flap wherein the seal between the flap and the inlet collar may be unsealed by a blunt ended member which makes an opening allowing to allow the container to be filled, whereas the flap may subsequently be resealed over the inlet collar once the container has been filled.

In other applications of the related art, an internal membrane is not used, rather the rear wall of the flexible container itself forms the welded closure.

The temperature required for sealing the port as described in US 4,257,535, US 4,672,688 and US 4,805,378 is typically in the range of from 160°C to 225°C, depending upon material characteristics and combined thicknesses of the rear container wall and the flap or membrane.

Further to this, the prior art in document US 3,231,444 refers to a method of heat sealing a thermoplastic fitment to a sheath of thermoplastic material and more particularly to a method of heat sealing a thermoplastic dispensing fitment to the exterior surface of one of two adjacent sheaths of thermoplastic material.

Finally, document US 4,063,990 relates to a device for the fluid tight sealing by welding with ultrasonics of a closable injection-molded spigot or fitting into an opening of a thin wall flexible thermoplastic synthetic-resin-foil container.

The above described documents provide a filling method that is commonly used in the aseptic and conventional packaging of fruit and vegetable pulp, juices and dairy products.

When using currently known devices and methods for the containment of fibrous and particulate products as discussed above, difficulty may be experienced in achieving satisfactory heat seals without entrapment of fibrous materials and particles within or across the seal. Another disadvantage experienced is the extended time required for heat penetration into the package from the external heat source under the limitations of the maximum temperature able to be employed without damage to the outer package layers.

A further disadvantage is experienced when alternative methods of heat sealing such as ultrasonic sealing are employed, whereby the ultrasonic transducer tends to damage the rearmost walls of the container configured as disclosed in the prior art, and does not achieve a. satisfactory seal between the inner membrane and the filling port. The frictional energy required to perform the seal tends to be dissipated between the layers of intervening materials when sealing is attempted over an annulus of similar dimensions to conventional heat sealing methods.

Any discussion of documents, publications, acts, devices, substances, articles, materials or the like which is included in the present specification has been done so for the sole purpose so as to provide a contextual basis for the present invention. Any such discussions are not to be understood as admission of subject matter which forms the prior art base, or any part of the common general knowledge of the relevant technical field in relation to the technical field of the present invention to which it extended at the priority date or dates of the present invention.

### Summary of the invention

In broad terms, the present invention provides a container for storage and dispensing of fluids, said container comprising collapsible front and rear walls defining a chamber, a gland defining a fluid passage carried on the front wall for allowing the passage of fluids into the chamber, the gland including a sealing land within the container for sealingly engaging a heat sealable membrane along a continuous seal upon the application of heat through the rear wall of the container, wherein the sealing land, in a pre-sealed condition, includes at toast one thermo-deformable projection having a raised profile providing an initial melt zone of reduced area relative to the area of the sealing land.

The gland extends through an aperture defined in the collapsible front wall of the container, and includes a base flange located within the container. Preferably, the sealing land is annular and defined on an innermost face of the base flange, and the deformable projection comprises at least one annular lip.

Advantageously, the annular lip is shaped to define a cutting edge and is formed with at least one deflection surface for deflecting matter away from the initial melt zone upon the sealable membrane and the sealing land being urged towards one another.

The annular lip is preferably shaped so as to be generally triangular in cross-section, the apex of the triangular section defining the cutting edge.

Preferably the container is formed from a flexible heat resistant material which allows the heat sealable membrane to be abutted against the sealing land from the interior of the container by compressing and urging a portion of the wall of the container towards the sealing land and which allows heat to be transferred through the rear wall by a heating element to the melt zone. Advantageously the sealing membrane is carried on the sealing land prior to sealing.

Preferably, the heat sealable membrane includes a thermoplastic heat sealable layer proximate the sealing land for allowing the seal to be formed, and a distal non-heat sealable layer to prevent adherence of the sealing membrane to an inner surface of the rear wall of the container, prior to the heat sealable membrane being heat sealed to the sealing land.

The heat sealable membrane may be carried on the rear wall of the container prior to being heat sealed to the sealing land.

Preferably, the gland may include a rupturable membrane extending across an external opening of the passage such that the container is sealed prior to ingress of fluid into the container. The membrane may be rupturable by a delivery means, the delivery means being engageable with the gland prior to rupture of the rupturable membrane to provide for aseptic delivery of a fluid into the container.

Preferably the container includes a sealing land and a thermoplastic layer of the sealing membrane which are formed from thermoplastic materials adapted to melt and form said seal at a temperature in the range between 100°C and 265°C.

More preferably , the sealing land and a heat sealable layer of the sealing membrane may be formed from thermoplastic materials adapted to melt and form said seal at a temperature between 130°C and 200°C.

Advantageously, the sealing land may include a plurality of annular thermo-deformable projections in a spaced apart relationship.

The present invention also provides a gland defining a passage for providing a fluid pathway for delivery into and dispensing from a collapsible container comprising front and rear walls defining a chamber, the gland mountable within an aperture on the front wall of the container, the gland including a sealing land within the container for receiving a heat sealable membrane which is arranged to be heat sealed through the rear wall of the container to form a continuous seal wherein said sealing land, in a pre-sealed condition, includes at least one thermo-deformable projection having a raised profile providing an initial melt zone of reduced area relative to the area of the sealing land.

Preferably the gland is of generally annular form and the at least one deformable projection of the sealing land extends circumferentially around the passage to define a cutting edge prior to deformation to sever any fibrous material present between the reformable projection and the sealing membrane upon abutment to the container with a heating means.

Advantageously, the deformable projection may be of a generally triangular cross-section, the apex of the triangle defining a cutting edge.

Preferably the gland includes a rupturable membrane which, prior to rupture, extends across the passage so as to seal the passage of the gland prior to the ingress of contents.

More preferably" the gland may be engageable with a fluid delivery means in a manner so as to be ruptured upon engagement with the fluid delivery means.

In still a further aspect of the invention there is provided a method of sealing the gland of a container, the method comprising the steps of:
providing a container having front and rear walls defining a chamber, and a gland carried on the front wall, the gland having a first end, a second end and a passage therethrough, the gland including a sealing land within the container for receiving a heat sealable membrane which is arranged to be heat sealed to the sealing land along a continuous seal, said sealing land, in a pre-sealed condition, including at least one projection having a raised profile for providing an initial melt or heat zone of reduced area relative to the area of the sealing land;
providing a heat sealable membrane adjacent the sealing land and extending over the passage of the gland; and
applying heat through the rear wall of the container to the heat sealable membrane using a heating means, and urging the heat sealable membrane and the sealing land towards each other;
wherein the deformable projection is configured such that upon abutment with the heat sealable membrane, the deformable projection and a thermoplastic layer of the sealable membrane are melted to form a seal between the heat sealable membrane and the sealing land thereby sealing the passage.

Preferably the heating means provides conductive and/or convective heat energy to the deformable projection and the sealable membrane. The heating means may heat the deformable projection and the sealable membrane by frictional energy or by ultrasonic energy.

### Brief description of the drawings

The invention now will be described, by way of example only, and with reference to the accompanying drawings in which:
Figure 1a shows a part sectional view of a gland and container of the related art prior to sealing;
Figure 1b shows an enlarged spot-sectional view of the gland and container of Figure 1a;
Figure 1c shows a part sectional view of the gland and container of Figure 1 a after sealing;
Figure 1d shows an enlarged spot-sectional view of the gland and container of Figure 1c;
Figure 2a shows a part sectional view of a first embodiment of a gland and container according to the present invention prior to sealing;
Figure 2b shows an enlarged spot-sectional view of the gland and container of Figure 2a;
Figure 2c shows a part sectional view of the gland and container of Figure 2a after sealing;
Figure 2d shows an enlarged spot-sectional view of the gland and container of Figure 2c;
Figure 2e shows apartly cutaway underplan view of the gland of Figure 2a;
Figure 2f shows a triangular profile of a deformable projection in an embodiment of the gland of Figure 2a;
Figure 2g shows a trapezoidal profile of a deformable projection in an alternative embodiment of the gland of Figure 2a;
Figure 2h shows a rounded profile of a deformable projection of the gland in afurther alternative embodiment of the gland of Figure 2a.
Figure 3a shows a part sectional view of a second embodiment of a gland and container according to the present invention prior to sealing;
Figure 3b shows an enlarged spot-sectional view of the gland and container of Figure 3a;
Figure 3c shows a triangular profile of the deformable projections of the gland of Figure 3a;
Figure 3d shows a trapezoidal profile of the deformable projections of an alternative embodiment the gland of Figure 3a; and
Figure 3e shows a rounded profile of the deformable projections of a further alternative embodiment the gland of Figure 3a;

### Detailed description of the embodiments

The following description refers to preferred embodiments of a sealable container according to the present invention. To facilitate an understanding of the invention, reference is made in the description of the accompanying drawings whereby a gland as provided by the related art is described, and a gland according to the present invention is illustrated in a preferred embodiment.

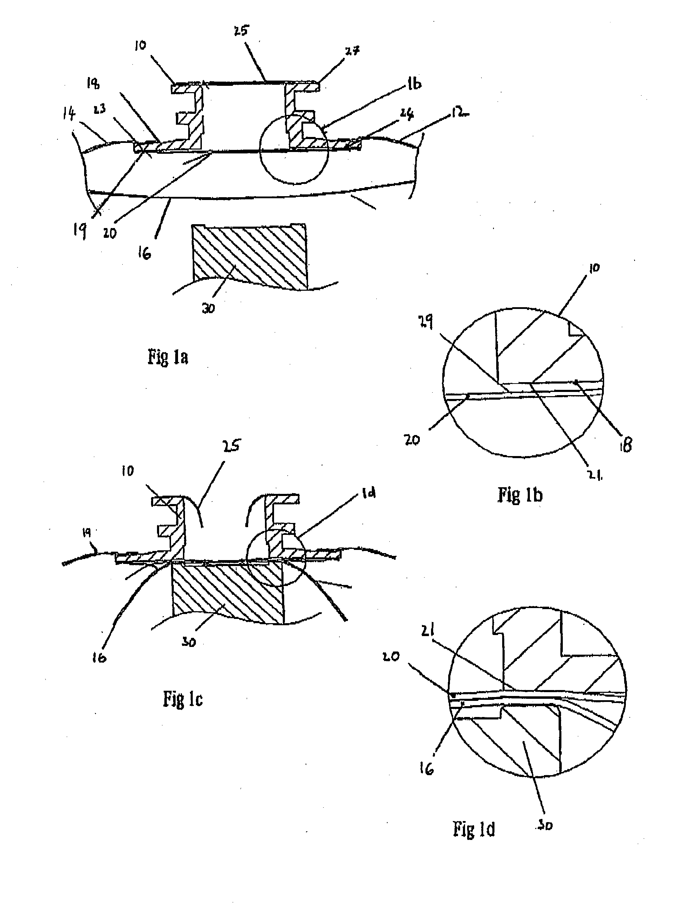

Referring to Figures 1a to 1d, there is shown a gland 10 for sealing a container as typified by devices of the related art. The related art gland 10 is of general tubular form, sealed to a package or container 12 typically comprising one or more plastic film layers forming a front wall 14, and one or more plastic film layers forming a rear wall 16 of the container 12. The gland 10 is formed with a base flange 18, the outer face of which is sealed to the front wall 19 of the container 12. A plastic film membrane 20 is partially attached to the inner face 21 of the base flange 18 at regions 23,24.

In this example, the gland 10 further includes a rupturable membrane 25 sealed onto a top flange 27 of the gland 10 and being located outside of the container 12 to maintain the container in a non-contaminated state and allow for aseptic filling of the container 12.

As shown in Figure 1b, the flap membrane 20 allows fluid to pass between the gland 10 and the membrane 20 at zone 29. The area in which the heat seal closure is to occur is at zone 29, and the seal is formed via an annular contact area between the inner flat surface 21 of the base flange 18 of the gland 10 and the membrane 20.

One manner demonstrated in the related art by which, the gland 10 may be sealed by the flap membrane 20 thereby sealing the container 12 is shown in Figure 1c. An annular copper heating element 30 is positioned at the rear wall but not in direct contact with it until after the container 12 is filled and prepared for sealing. The heating element 30, is advanced from the rear of the container 12 and urges the rear wall 16 towards the front wall 19 of the container 12 such that the flap membrane 20 is abutted to the innermost flange 21 at zone 32 as shown in more detail in Figure 1d. This causes the flap membrane 20 to fuse with the innermost flange so as to form an annular seal and seal the container 12, A broad annular seal contact area and indentation on melt-flow is indicated by 35 Sufficient heat and pressure need to be applied to the outer layer of the rear wall 16 of the container 12 to achieve satisfactory sealing performance of the flap membrane 20 by the heat sealer 30. In other examples of the related art, the rear wall 16 of the container is used as the flap. This can require the heating element 30 to be resident in the sealing position for some time in order to seal the container 12.

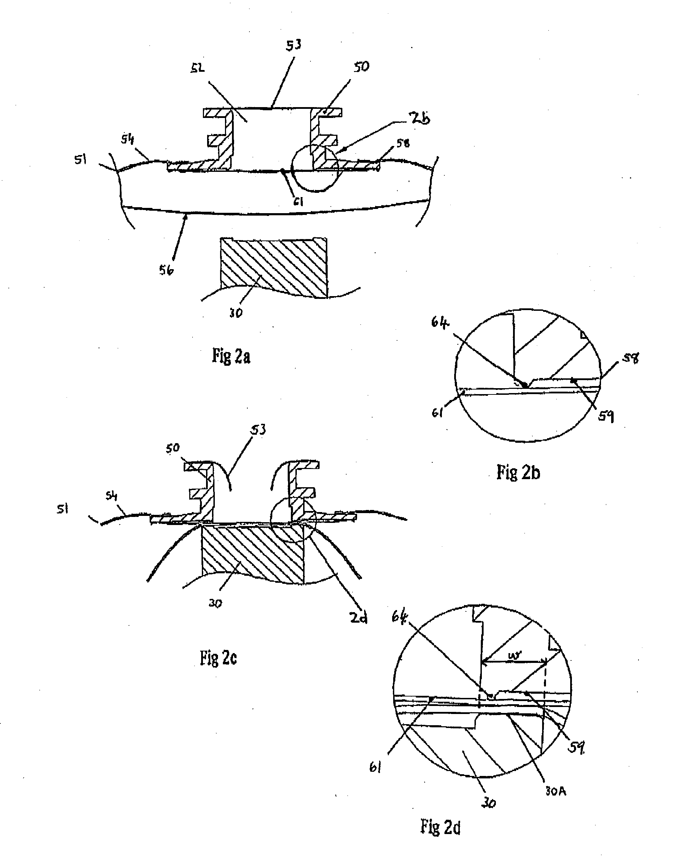

Referring to Figures 2a to 2f, a first embodiment of a gland 50 according to the present invention is shown in a container 51. The gland 50 has a fluid passage 52 to allow for ingress of flowable material for example liquids, suspended liquids, pulps and the like into the container 51. The container 51 has a front wall 54 and a rear wall 56. The gland 50 includes a base flange 58, the outer face of which is sealed to the front wall 54 of the container 51. The inner face 59 of the base flange 58 provides a sealing land 59 for a flap membrane 61. The gland may be sealed before filling by a film 53 extending across the passage 52.

Typically flap membrane 61, extends over the sealing land 59, and is arranged to be fully sealed to the sealing land 59 on application of heat from the heating element 30 through the membrane 61 in a similar manner as is outlined above with the previous reference to the related art technique.

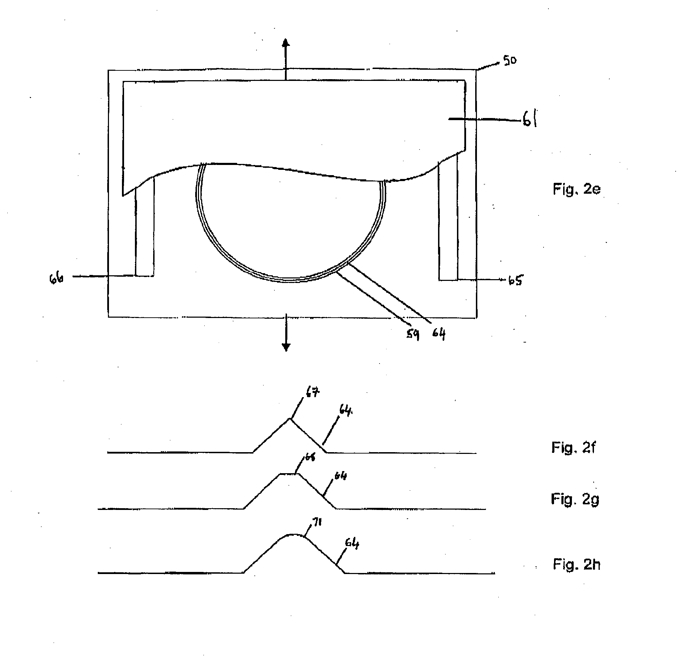

The sealing land 59 includes a deformable projection 64 having a raised profile as shown in Figure 2b and in more detail in Figure 2f, The sealing land is of a width which corresponds to the width of the uppermost face 30A of the annular heating element 30, as well as the width of the side wall of the gland.

The deformable projection 64 is shaped and sized so that when the sealing membrane 61 is abutted against the deformable projection 64 under heat and pressure, an initial melt or heat zone is formed by the deformable projection 64 relative to the rest of the sealing land 59. Upon further pressure, the deformable projection 64 compresses and expands radially with respect to the passage 52 so as to be planar and provide a complete seal between the flap membrane 61 and the sealing land 59.

Referring to Figure 2e the gland 50 is shown in underplan view in a pre-sealed condition. The partial flap membrane 61 depicted in the figure may be attached at weld lines 65, 66 on the sealing land 59. The flap membrane extends in tension across the region of the deformable projection 64 and between the weld lines.

Because the flap membrane 61 is generally only partially attached to the gland at the weld lines 65,66 in the pre-sealed condition, upon engagement with a filling head (not shown) the resilient flange portion of the gland flexes downwardly, in response to the fluid pressure on the membrane. The flexure of the gland creates a void between the membrane 61 and the sealing land 59 allowing the sideways passage of fluid between the sealing membrane 61 and the sealing land 59 as indicated on the figure by arrows.

Turning to Figure 2f, it can be seen that an embodiment of the deformable projection 64 has a generally triangular cross section, tapering to a pointed apex region 67 defining a cutting edge. The severing of fibres present between the sealing land 59 and the sealable membrane 61 reduces the incidence of fibrous material extending through the seal formed between the sealing membrane 56 and the surface of the land 54, thus reducing the likelihood of such fibres compromising the integrity of the seal. This provides for a more reliable seal.

In an alternate embodiment of the present invention shown in Figure 2g, the deformable projection 64 has a generally trapezoidal profile, with a flattened top region 68. This profile may assist in urging any fibrous material or other particles that may be trapped between the membrane 61 and the sealing land 59 immediately prior to the sealing process away from the sealing region. The combination of heat from the heating element and pressure cooperate to deform the projection and urge the material away from the sealing region.

In still a further embodiment of the present invention shown in Figure 2h, the deformable projection 64 has a generally rounded profile 71 which may also assist in urging fibrous and particulate material away from the sealing region during the sealing process.

The deformable projection 64, shown in the present embodiments of the invention, may be in the form of an annular lip extending around the passage 52 of the gland 50. The annular lip need not be continuous and may exist in the form of discrete entities which, upon application of heat and pressure, deform collectively to form the sealing land 59. In alternate embodiments, there may exist one or more continuous or discontinuous annular lips which, when heated and compressed, form the surface of the sealing land 59.

Furthermore, the annular lip has the additional feature of urging material such as seeds or pips, or other such particles away from the region at which the seal is to be initiated, thus providing for a complete seal in at least the initial deformation region. As will be appreciated, by ensuring a complete seal in at least one portion of the sealing land, the gland may be effectively and reliably sealed. Still further, the triangular cross-section of the annular lip as described In reference to the embodiments of the present application provides an initial wedge effect which may drive seeds or pips outwardly away from the initial melt zone as the heat sealable membrane is urged against the annular rib.

The alternate deformable projection profiles provided enhance localised heating and deformation of the projection, and may assist in severing of fibrous material and driving particulates away from the initial melt zone. The use of further alternate profiles according to various applications allows for further enhancement of localised heating thus providing a more efficiently and effectively formed seal.

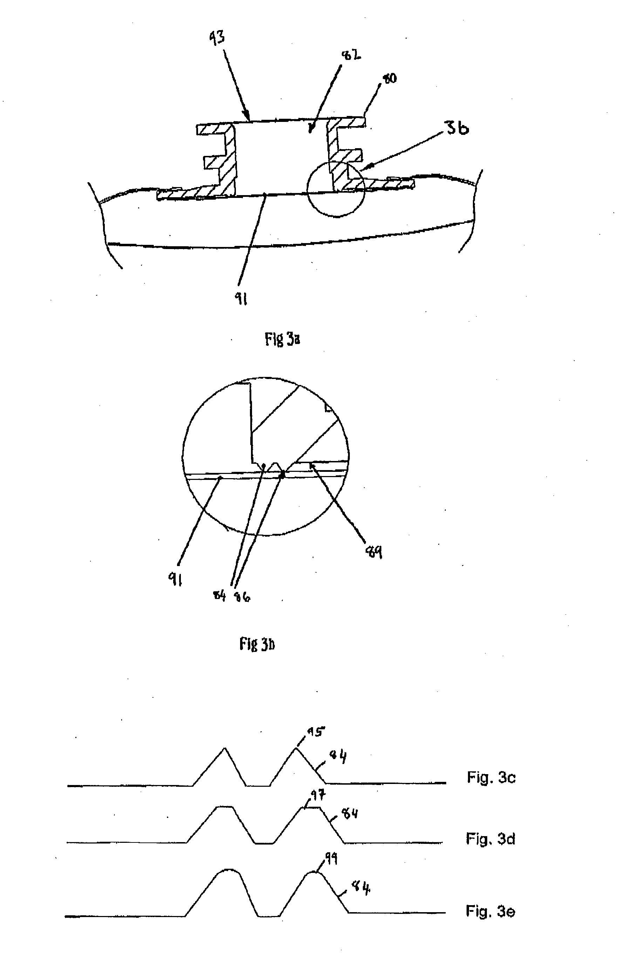

Referring to Figures 3a to 3b a further embodiment of a gland 80 according to the present invention is shown. The gland 80 has a fluid passage 82 and the includes two deformable projections 84,86 in the form of concentric projections having a praised profile, (concentric with respect to the fluid passage 82 of the gland) extending from the sealing land 89.

Again, the deformable projections 84,86 are shaped and sized such that when a sealing membrane 91 is abutted against the deformable projections 84,86 under heat and pressure, the gland 80 is sealed in a similar manner as described with reference to the previous embodiments. Two initial heat or melt zones are provided by the deformable projections 84,86 relative to the remaining part of the sealing land 89. Both deformable projections 84,86 upon application of heat and pressure, are deformed towards the rest of the sealing land 89 as well as both radially inward and outward.

Turning to Figure 3c, it can be seen the deformable projections 84,86 of the gland of Figure 3b may be generally triangular in cross section, tapering to a pointed apex region 95 defining a cutting edge. The severing of fibres present between the sealing land 89 and the sealable membrane 91 reduces the incidence of fibrous material extending through the seal formed between the sealing membrane 91 and the surface of the sealing land 89, thus reducing the likelihood of such fibres compromising the integrity of the seal, thereby providing a more reliable seal.

In an alternate embodiment of the present invention shown in Figure 3d, the deformable projections 84 may have generally trapezoidal profiles 97, This profile may assist in urging any fibrous material or other particles that may be trapped between the membrane 91 and the sealing land 89 immediately prior to the sealing process away from the sealing region. The combination of heat from the heating element and pressure cooperate to deform the projection and urge the material away from the sealing region.

In still a further embodiment of the present invention shown in Figure 3e, the deformable projection 84 may have a generally rounded profile 99 which may also assist in urging fibrous and particulate material away from the sealing region during the seating process.

The present invention, by providing a localised heating zone for the sealing lands 59,69 in the form of the deformable projections 64,84,86 may substantially reduce the temperature required of the heating element to form the seal. Still further, the time taken to perform the seal may be substantially reduced. Alternatively both the temperature required and the time taken to perform the seal may be substantially reduced in comparison with methods and devices of the related art which typically require a heating element temperature of 180 degrees Celsius to 200 degrees Celsius and a dwell time of 1.5 seconds- to 4 seconds. The temperature of the heating element may be reduced to 140 degrees Celsius to 150 degrees Celsius for the same dwell time using the gland of the present invention.

The time taken to form a seal may be substantially reduced by up to about 30% or more. In turn, this means the incidence of damage to the container during sealing due to elevated temperatures and pressures is reduced, and the incidence of damage is also reduced due to the reduced cycle time taken to effect the seal. For sealable containers, for example those with a volume of 3 to 4 litres, this can mean a significant reduction in the total filling and sealing cycle time.

As described with reference to the embodiments shown in Figures 3a to 3c, the deformable projections 84,86 of the gland 80 may be provided in the form of an annular lip of a generally triangular cross-section extending around the passage 72 of the gland 80.

In the embodiments shown in Figures 3a-3c and Figures 2a-2f the deformable projection 64, 84,86, extends about 0.75 mm to 1 mm from the rest of the sealing land 59,89 and has an apex defining a cutting edge. The triangular cross-section of the lip is preferably of equilateral triangular form and a base width of about 0.75 mm to 1 mm. The sealing land preferably has a width of in the range of from about 3 mm to about 5 mm. A significant advantage provided by the present invention is a gland 50,80 which provides a more reliable seal, even in the event that a heating means or ultrasonic transducer is misaligned with the sealing land 59.89. In such an event, the deformable projection(s) 64,84,86 which first contact the heating means or ultrasonic transducer with a flap membrane 61,91 disposed therebetween will form an initial melt zone and deform preferentially towards the rest of the sealing land surface 59,89 until, the remaining part of the undeformed deformable projection is abutted with the heating means or ultrasonic transducer, which in turn becomes heated and deformed.

As will be appreciated, when misalignment occurs between a heating means or ultrasonic transducer and a gland of the prior art, the sealing land of the gland which is initially contacted and heated would need a significant amount of heat, pressure and time so as to be deformed to an extent that the remaining portion of the sealing land was then contacted and heated to form a suitably heated surface to effect a reliable seal. As significant heat, temperature and pressure would be required, the sealable membrane and/or container wall may be destroyed or at least partially compromised, resulting in an incompletely or weakly sealed gland, in comparison with that provided by the device and method according to the present invention.

During filling processes of containers of a relatively low volume whereby the time taken to seal a container is a significant portion of the filling and sealing cycle, it will be appreciated that the present invention provides a significant time reduction in the cycle whilst providing a reliable seal which allows for imperfections In alignment during the sealing cycle when used with both large and small volume containers.

A further feature provided by the present invention as embodied in the first and second embodiments may be the ability of the annular lip, at least initially to sever fibrous material which may be present between the sealing land 59, 89 as discussed previously. This reduces the incidence of fibrous material extending through the seal formed between the sealing membrane 61,91 and the sealing land 59,89 thus reducing the likelihood of such fibres compromising the integrity of the seal, thereby providing a more reliable seal,

Furthermore, the annular lip has the additional feature of urging material such as seeds or pips, or other such particles away from the region at which the seal is to be initiated, thus providing for a complete seal in at least the initial deformation region. As will be appreciated, by ensuring a complete seal in at least one portion of the sealing land, the gland may be effectively and reliably sealed. Still further, the triangular cross-section of the annular lip as described in reference to the embodiments of the present application provides an initial wedge effect which may drive seeds or pips outwardly away from the initial melt zone as the heat sealable membrane is urged against the annular rib.

It will also be appreciated that the high pressure and reduced surface area contact point thus formed between the sealing land 59,89 and the sealing membrane 61,91 as provided by the present invention concentrates the transfer of heat between the two parts and initiates the progression of melting and co-mingling of the compatible materials more quickly and efficiently than a broader contact area as described in the prior art.

Furthermore, In related art glands, in which the sealing gland is uni-planar and the annular heating element is similarly uni-planar, any misalignment where the planes of the respective heating element and sealing gland are not parallel will tend to compromise the seal, or alternatively increase the time and/or temperature required to perfect the seal. In the present invention, the relatively rapid deformation of the raised profile under suitable conditions of heat and pressure will tend to be self-correcting in a situation where the plane of the annular heating element is not uniformly parallel with the plane defined by the upper edge of the raised profile.

The injection moulded gland may be produced from polyethylene of densities and properties ranging from low density, "linear low density", medium density to blends with a high density component. The polyethylene density is chosen to optimise various parameters for the gland, including rigidity, flex, melt-flow and temperature resistance required.

The bag wall materials may be made up of multiple layers in order to provide the required attributes of barrier, moisture resistance, physical strength and heat sealability.

Typically the inner layers in contact with the product are low density polyethylene in various forms, either as free layers or as an inner layer bonded or laminated to a poly amide (nylon) layer or polyester layer in the latter case, the resulting laminate may also include an additional layer, such as aluminium foil, PVDC, EVOH, the layer selected to provide properties such as gas, moisture or light barriers. The sealing land 59,89 and the sealing membrane, 61,91 are formed from materials which allow for co-mingling upon softening or melting so as to form the required seal. Numerous materials may be used, in particular thermoplastic polymeric materials, such as high density polyethylene (HDPE).

The sealing land and the sealing membrane are typically formed from polymeric materials which flow at localised temperatures in the range of from 130°C and 200°C so as to effect the seal. However, it will be appreciated that alternate polymeric materials which flow so as to form the seal at localised temperatures as low as 100°C and as high as 265°C may be used.

The sealing membranes are typically bonded laminations of various gauges. The inner face of the membrane adjacent to the gland is made from a low density polyethylene material that will suitably heat seal to the gland. The other side of the membrane is typically made from polyester (PET Film) of a grade that will not melt or heat seal to any of the polyethylene materials that are used at the temperatures specified. A polyamide material may also be used for the sealing membrane although may not have as desirable moisture absorption and extensibility properties.

As with the related art, the sealing membrane may be separate from the landing surface and may be present In the form of a flap member inside the container, or even be a portion of the wall of the container, without departing from the scope and spirit of the invention.

A rupturable seal 53,93 may be provided such that the present invention may be used in aseptic filing procedures, and the seal formed may be a hermetic seal so as to allow for the preservation of food or drink contents within the container.

Various other maternal may also be used for each of the gland, sealing membrane and bag. For example, polycarbonate, PVC, polypropylene and other films are in various applications in liquid packaging either as single film or in combined form as co-extrusions or laminates may be suitable, provided that the materials relative melt points, and heat sealability to each other are monitored.

It will be understood that the invention disclosed and defined in this specification extends to all alternative combinations of two or more of the individual features mentioned or evident from the text or drawings. All of these different combinations constitute various alternative aspects of the invention.

It will also be understood that the term "comprises" (or its grammatical variants) as used in this specification is equivalent to the term "includes" and should not be taken as excluding the presence of other elements or features.

## Claims

1. A container (51) for storage and dispensing of fluids, said container (51) comprising collapsible front and rear walls (54, 56) defining a chamber, a gland (50) defining a fluid passage carried on the front wall (54) for allowing the passage of fluids into the chamber, wherein the gland (50) extends through an aperture defined in the collapsible front wall (54) of the container (51), and includes a base flange (58) located within the container (51), and wherein the gland (50) includes a sealing land (59) within the container (51) for sealingly engaging a heat sealable membrane (61) along a continuous seal upon the application of heat through the rear wall (56) of the container (51), **characterized in that** the sealing land (59), in a pre-sealed condition, includes at least one thermo-deformable projection (64) having a raised profile providing an initial melt zone of reduced area relative to the area of the sealing land (59).

2. A container (51) as claimed in claim 1, **characterized in that** the sealing land (59) is annular and defined on an innermost face of the base flange (58), and the deformable projection (64) comprising at least one annular lip.

3. A container (51) as claimed in claim 2, **characterized in that** the annular lip is shaped to define a cutting edge.

4. A container (51) as claimed in claim 3, **characterized in that** the annular lip is formed with at least one deflection surface for deflecting matter away from the initial melt zone upon the sealable membrane (61) and the sealing land (59) being urged towards one another.

5. A container (51) as claimed in claim 4, **characterized in that** the angular lip is generally triangular in cross-section, the apex of the triangular cross-section defining the cutting edge.

6. A container (51) as claimed in any of the preceding claims, **characterized in that** the container (51) is formed from a flexible heat resistant material which allows the heat sealable membrane (61) to be abutted against the sealing land (59) from the interior of the container (51) by compressing and urging a portion of the wall (56) of the container (51) towards the sealing land (59) and which allows heat to be transferred through the rear wall (56) by a heating element to the melt zone.

7. A container (51) as claimed in claim 6, **characterized in that** the sealing membrane (61) is carried on the sealing land (59) prior to sealing.

8. A container (51) as claimed in claim 7, **characterized in that** the heat sealable membrane (61) includes a thermoplastic heat sealable layer proximate the sealing land (59) for allowing the seal to be formed, and a distal non-heat sealable layer to prevent adherence of the sealing membrane (61) to an inner surface of the rear wall (56) of the container (51), prior to the heat sealable membrane (61) being heat sealed to the sealing land (59).

9. A container (51) as claimed in any one of claims 1 to 6, **characterized in that** the heat sealable membrane (61) is carried on the rear wall (56) of the container (51) prior to being heat sealed to the sealing land (59).

10. A container (51) as claimed in any one of the preceding claims, **characterized in that** the gland (50) further includes a rupturable membrane (53) extending across an external opening of the passage (52) such that the container (51) is sealed prior to ingress of fluid into the container (51).

11. A container (51) as claimed in claim 10, **characterized in that** the membrane (53) is rupturable by a delivery means, the delivery means being engageable with the gland (50) prior to rupture of the rupturable membrane (53) to provide for aseptic delivery of a fluid into the container (51).

12. A container (51) as claimed in any one of claims 1 to 11, **characterized in that** the sealing land (59) and a thermoplastic layer of the sealing membrane (61) are formed from thermoplastic materials adapted to melt and form said seal at a temperature in the range between 100°C and 265°C.

13. A container (51) as claimed in any one of the preceding claims, **characterized in that** the sealing land (59) and a heat sealable layer of the sealing membrane (61) are formed from thermoplastic materials adapted to melt and form said seal at a temperature between 130°C and 200°C.

14. A container (51) as claimed in any one of the preceding claims, **characterized in that** the sealing land (59) includes a plurality of annular thermo-deformable projections (64) in a spaced apart relationship.

15. A container (51) as claimed in any one of the preceding claims, **characterized in that** the thermo-deformable projection (64) has a raised profile which is trapezoidal or curved.

16. A container (51) as claimed in any one of the preceding claims, **characterized in that** the gland (50) is of generally annular form and the at least one deformable projection (64) of the sealing land (59) extends a circumferentially around the passage to define a cutting edge prior to deformation.

17. A container (51) as claimed in any one of the preceding claims, **characterized in that** the thermo-deformable projection (64) is shaped to urge fibres and/or particles of the fluid away from the continuous seal.

18. A container (51) as claimed in any one of the preceding claims, **characterized in that** the sealable membrane (61) is partially attached to the gland (50) in a pre-sealed condition so that fluid can pass between the sealing land (59) and the sealing membrane (61).

19. A method of sealing the gland (50) of a container (51), the method comprising the steps of:
providing a container (51) having front and rear walls (54, 56) defining a chamber, and a gland (50) carried on the front wall (54), the gland (50) having a first end, a second end and a passage (52) therethrough, the gland (50) including a sealing land (59) within the container (51) for receiving a heat sealable membrane (61) which is arranged to be heat sealed to the sealing land (59) along a continuous seal, said sealing land (59), in a pre-sealed condition, including at least one projection (64) having a raised profile for providing an initial melt or heat zone of reduced area relative to the area of the sealing land (59);
providing a heat sealable membrane (61) adjacent the sealing land (59) and extending over the passage of the gland (50);
and applying heat through the rear wall (56) of the container (51) to the heat sealable membrane (61) using a heating means; and urging the heat sealable membrane (61) and the sealing land (59) towards each other;
wherein the deformable projection (64) is configured such that upon abutment with the heat sealable membrane (61), the deformable projection (64) and a thermoplastic layer of the sealable membrane (61) are melted to form a seal between the heat sealable membrane (61) and the sealing land (59) thereby sealing the passage.

20. The method of claim 19, **characterized in that** the thermo-deformable projection (64) is shaped to urge fibres and/or particles of the fluid away from the continuous seal.

21. The method of claim 19 or 20, **characterized in that** the heating means provides conductive and/or convective heat energy to the deformable projection (64) and the sealable membrane (61).

22. The method of claim 21, **characterized in that** the heating means heats the deformable projection (64) and the sealable membrane (61) by frictional energy or by ultrasonic energy.

23. The method of any one of claims 19 to 22, **characterized in that** the step of providing a heat sealable membrane (59) includes providing the heat sealable membrane (59) partially attached to the gland (50).

24. The method of any one of claims 19 to 23, **characterized in that** before the step of applying heat through the rear wall (56) of the container (51) to the heat sealable membrane (59), the method includes the step of:
passing fluid into the chamber through the gland (50) and between the sealing land (61) and the heat sealable membrane (59).

## Patentansprüche

1. Behälter (51) zum Aufbewahren und Spenden von Flüssigkeiten, wobei der Behälter (51) eine zusammenfaltbare Vorder- und Rückwand (54, 56) umfasst, die eine Kammer definieren, einen Dichtungsstutzen (50), der einen an der Vorderwand (54) befindlichen Flüssigkeitsdurchgang definiert, damit Flüssigkeiten in die Kammer gelangen können, wobei sich der Dichtungsstutzen (50) durch eine Öffnung erstreckt, die in der zusammenfaltbaren Vorderwand (54) des Behälters (51) definiert ist, und einen Basisflansch (58) aufweist, der in dem Behälter (51) angeordnet ist, und wobei der Dichtungsstutzen (50) eine Dichtungsstegfläche (59) in dem Behälter (51) aufweist, um bei Anwendung von Wärme durch die Rückwand (56) des Behälters (51) abdichtend mit einer heißsiegelbaren Membran (61) entlang einer umlaufenden Dichtung in Eingriff zu kommen, **dadurch gekennzeichnet, dass** die Dichtungsstegfläche (59) in unversiegeltem Zustand mindestens einen thermisch verformbaren Vorsprung (64) mit einem erhöhten Profil aufweist, das eine Anfangsschmelzzone mit einer relativ zu der Fläche der Dichtungsstegfläche (59) verringerten Fläche bereitstellt.

2. Behälter (51) nach Anspruch 1, **dadurch gekennzeichnet, dass** die Dichtungsstegfläche (59) ringförmig ist und an einer innersten Fläche des Basisflanschs (58) definiert ist, und der verformbare Vorsprung (64) mindestens eine ringförmige Lippe aufweist.

3. Behälter (51) nach Anspruch 2, **dadurch gekennzeichnet, dass** die ringförmige Lippe so geformt ist, dass sie eine Schneidkante definiert.

4. Behälter (51) nach Anspruch 3, **dadurch gekennzeichnet, dass** die ringförmige Lippe mit mindestens einer Ablenkfläche geformt ist, um Material von der Anfangsschmelzzone abzulenken, wenn die siegelbare Membran (61) und die Dichtungsstegfläche (59) zusammengedrückt werden.

5. Behälter (51) nach Anspruch 4, **dadurch gekennzeichnet, dass** die ringförmige Lippe einen im Allgemeinen dreieckigen Querschnitt aufweist, wobei die Spitze des dreieckigen Querschnitts die Schneidkante definiert.

6. Behälter (51) nach einem der vorhergehenden Ansprüche, **dadurch gekennzeichnet, dass** der Behälter (51) aus einem flexiblen, wärmebeständigen Material geformt ist, das das Aneinanderstoßen der heißsiegelbaren Membran (61) an der Dichtungsstegfläche (59) von der Innenseite des Behälters (51) aus durch Pressen und Drücken eines Abschnitts der Wand (56) des Behälters (51) in Richtung der Dichtungsstegfläche (59) ermöglicht, und das die Übertragung von Wärme durch die Rückwand (56) von einem Heizelement auf die Schmelzzone ermöglicht.

7. Behälter (51) nach Anspruch 6, **dadurch gekennzeichnet, dass** die siegelbare Membran (61) vor dem Versiegeln an der Dichtungsstegfläche (59) getragen wird.

8. Behälter (51) nach Anspruch 7, **dadurch gekennzeichnet, dass** die heißsiegelbare Membran (61) eine heißsiegelbare thermoplastische Schicht nahe der Dichtungsstegfläche (59) aufweist, damit die Versiegelung gebildet werden kann, und eine distale nicht heißsiegelbare Schicht, welche das Anhaften der siegelbaren Membran (61) an einer Innenfläche der Rückwand (56) des Behälters (51) verhindert, bevor die heißsiegelbare Membran (61) an die Dichtungsstegfläche (59) gesiegelt wird.

9. Behälter (51) nach einem der Ansprüche 1 bis 6, **dadurch gekennzeichnet, dass** die heißsiegelbare Membran (61) vor der Heißsiegelung an die Dichtungsstegfläche (59) an der Rückwand (56) des Behälters (51) getragen wird.

10. Behälter (51) nach einem der vorhergehenden Ansprüche, **dadurch gekennzeichnet, dass** der Dichtungsstutzen (50) des Weiteren eine aufreißbare Membran (53) aufweist, die sich über eine externe Öffnung des Durchgangs (52) erstreckt, so dass der Behälter (51) vor dem Eintreten von Flüssigkeit in den Behälter (51) versiegelt ist.

11. Behälter (51) nach Anspruch 10, **dadurch gekennzeichnet, dass** die Membran mithilfe einer Einleitungsvorrichtung aufreißbar ist, wobei die Einleitungsvorrichtung vor dem Aufreißen der aufreißbaren Membran (53) mit dem Dichtungsstutzen (50) in Eingriff gebracht werden kann, um das aseptische Einleiten einer Flüssigkeit in den Behälter (51) zu ermöglichen.

12. Behälter (51) nach einem der Ansprüche 1 bis 11, **dadurch gekennzeichnet, dass** die Dichtungsstegfläche (59) und eine thermoplastische Schicht der siegelbaren Membran (61) aus thermoplastischen Materialien gebildet sind, die dazu eingerichtet sind, bei einer Temperatur im Bereich von 100 °C bis 265 °C zu schmelzen und die Versiegelung auszubilden.

13. Behälter (51) nach einem der vorhergehenden Ansprüche, **dadurch gekennzeichnet, dass** die Dichtungsstegfläche (59) und eine heißsiegelbare Schicht der siegelbaren Membran (61) aus thermoplastischen Materialien gebildet sind, die dazu eingerichtet sind, bei einer Temperatur zwischen 130 °C bis 200 °C zu schmelzen und die Versiegelung auszubilden.

14. Behälter (51) nach einem der vorhergehenden Ansprüche, **dadurch gekennzeichnet, dass** die Dichtungsstegfläche (59) eine Vielzahl von ringförmigen thermisch verformbaren Vorsprüngen (64) aufweist, die in einem beabstandeten Verhältnis stehen.

15. Behälter (51) nach einem der vorhergehenden Ansprüche, **dadurch gekennzeichnet, dass** der thermisch verformbare Vorsprung (64) ein erhöhtes Profil aufweist, das trapezförmig oder gewölbt ist.

16. Behälter (51) nach einem der vorhergehenden Ansprüche, **dadurch gekennzeichnet, dass** der Dichtungsstutzen (50) eine im Allgemeinen ringförmige Form aufweist und sich der mindestens eine verformbare Vorsprung (64) der Dichtungsstegfläche (59) umfänglich um den Durchgang erstreckt, um vor dem Verformen eine Schneidkante zu definieren.

17. Behälter (51) nach einem der vorhergehenden Ansprüche, **dadurch gekennzeichnet, dass** der thermisch verformbare Vorsprung (64) so geformt ist, dass er Fasern und/oder Partikel der Flüssigkeit von der umlaufenden Dichtung abhält.

18. Behälter (51) nach einem der vorhergehenden Ansprüche, **dadurch gekennzeichnet, dass** die siegelbare Membran (61) in unversiegeltem Zustand teilweise an dem Dichtungsstutzen (50) befestigt ist, so dass Flüssigkeit zwischen der Dichtungsstegfläche (59) und der siegelbaren Membran (61) hindurch gelangen kann.

19. Verfahren zum Versiegeln des Dichtungsstutzens (50) eines Behälters (51), wobei das Verfahren folgende Schritte umfasst:
Bereitstellen eines Behälters (51) mit Vorder- und Rückwand (54, 56), die eine Kammer definieren, und mit einem Dichtungsstutzen (50), der an der Vorderwand (54) getragen wird, wobei der Dichtungsstutzen (50) ein erstes Ende, eine zweites Ende und einen hindurchführenden Durchgang (52) aufweist, der Dichtungsstutzen (50) eine Dichtungsstegfläche (59) in dem Behälter (51) aufweist, um eine heißsiegelbare Membran (61) aufzunehmen, die dazu eingerichtet ist, an der Dichtungsstegfläche (59) entlang einer umlaufenden Dichtung heißversiegelt zu werden, wobei die Dichtungsstegfläche (59) in unversiegeltem Zustand mindestens einen Vorsprung (64) mit einem erhöhten Profil aufweist, um eine Anfangsschmelzzone oder Erhitzungszone mit einer relativ zu der Fläche der Dichtungsstegfläche (59) verringerten Fläche bereitzustellen;
Bereitstellen einer heißsiegelbaren Membran (61), die an die Dichtungsstegfläche (59) angrenzt und sich über den Durchgang des Dichtungsstutzens (50) erstreckt;
und Aufbringen von Wärme durch die Rückwand (56) des Behälters (51) auf die heißsiegelbare Membran (61) unter Verwendung einer Heizvorrichtung; und Zusammendrücken der heißsiegelbaren Membran (61) und der Dichtungsstegfläche (59);
wobei der verformbare Vorsprung (64) so ausgebildet ist, dass bei Aufeinandertreffen mit der siegelbaren Membran (61) der verformbare Vorsprung (64) und eine thermoplastische Schicht der siegelbaren Membran (61) schmelzen und eine Versiegelung zwischen der heißsiegelbaren Membran (61) und der Dichtungsstegfläche (59) bilden, so dass der Durchgang versiegelt wird.

20. Verfahren nach Anspruch 19, **dadurch gekennzeichnet, dass** der thermisch verformbare Vorsprung (64) so geformt ist, dass er Fasern und/oder Partikel der Flüssigkeit von der umlaufenden Dichtung abhält.

21. Verfahren nach Anspruch 19 oder 20, **dadurch gekennzeichnet, dass** die Heizvorrichtung konduktive und/oder konvektive Wärmeenergie für den verformbaren Vorsprung (64) und die siegelbare Membran (61) bereitstellt.

22. Verfahren nach Anspruch 21, **dadurch gekennzeichnet, dass** die Heizvorrichtung den verformbaren Vorsprung (64) und die siegelbare Membran (61) durch Reibungsenergie oder Ultraschallenergie erwärmt.

23. Verfahren nach einem der Ansprüche 19 bis 22, **dadurch gekennzeichnet, dass** der Schritt zum Bereitstellen einer heißsiegelbaren Membran (59) das Bereitstellen der heißsiegelbaren Membran (59) als teilweise an dem Dichtungsstutzen (50) befestigt beinhaltet.

24. Verfahren nach einem der Ansprüche 19 bis 23, **dadurch gekennzeichnet, dass** das Verfahren vor dem Schritt zum Aufbringen von Wärme durch die Rückwand (56) des Behälters (51) auf die heißsiegelbare Membran (59) folgenden Schritt aufweist:
Einleiten von Flüssigkeit in die Kammer durch den Dichtungsstutzen (50) und zwischen der Dichtungsstegfläche (61) und der heißsiegelbaren Membran (59) hindurch.

## Revendications

1. Récipient (51) permettant de stocker et de distribuer des fluides, ledit récipient (51) comprenant des parois avant et arrière pliables (54, 56) définissant une chambre, un manchon (50) définissant un passage de fluide supporté sur la paroi avant (54) pour permettre le passage de fluide dans la chambre, dans lequel le manchon (50) s'étend à travers une ouverture définie dans la paroi avant pliable (54) du récipient (51) et comporte une bride de base (58) située à l'intérieur du récipient (51) et dans lequel le manchon (50) comporte une plage de scellement (59) à l'intérieur du récipient (51) pour venir en prise étanche avec une membrane thermoscellable (61) le long d'un joint continu lors de l'application de chaleur à travers la paroi arrière (56) du récipient (51), **caractérisé en ce que** la plage de scellement (59), dans l'état pré-scellé, comporte au moins une projection thermodéformable (64) ayant un profil surélevé fournissant une zone de fusion initiale d'une aire réduite par rapport à l'aire de la plage de scellement (59).

2. Récipient (51) selon la revendication 1, **caractérisé en ce que** la plage de scellement (59) est annulaire et définie sur la face la plus intérieure de la bride de base (58) et la projection déformable (64) comprend au moins une lèvre annulaire.

3. Récipient (51) selon la revendication 2, **caractérisé en ce que** la lèvre annulaire est conformée de manière à définir un bord de coupe.

4. Récipient (51) selon la revendication 3, **caractérisé en ce que** la lèvre annulaire est munie d'au moins une surface de déviation pour dévier la matière provenant de la zone de fusion initiale lorsque la membrane scellable (61) et la plage de scellement (59) sont poussées l'une vers l'autre.

5. Récipient (51) selon la revendication 4, **caractérisé en ce que** la lèvre annulaire possède une coupe globalement triangulaire, le sommet de la coupe triangulaire définissant le bord de coupe.

6. Récipient (51) selon l'une quelconque des revendications précédentes, **caractérisé en ce que** le récipient (51) est formé à partir d'un matériau flexible résistant à la chaleur permettant à la membrane thermoscellable (61) de venir en butée contre la plage de scellement (59) depuis l'intérieur du récipient (51) par compression et poussée d'une partie de la paroi (56) du récipient (51) vers la plage de scellement (59) et permettant à la chaleur d'être transférée à travers la paroi arrière (56) par un élément chauffant vers la zone de fusion.

7. Récipient (51) selon la revendication 6, **caractérisé en ce que** la membrane scellable (61) est supportée sur la plage de scellement (59) avant scellement.

8. Récipient (51) selon la revendication 7, **caractérisé en ce que** la membrane thermoscellable (61) comporte une couche thermoplastique thermoscellable à proximité de la plage de scellement (59) pour permettre la formation du joint et une plage distale non thermoscellable pour empêcher l'adhérence de la membrane scellable (61) sur la surface interne de la paroi arrière (56) du récipient (51) avant de sceller la membrane thermoscellable (61) sur la plage de scellement (59).

9. Récipient (51) selon l'une quelconque des revendications 1 à 6, **caractérisé en ce que** la membrane thermoscellable (61) est supportée sur la paroi arrière (56) du récipient (51) avant d'être scellée sur la plage de scellement (59).

10. Récipient (51) selon l'une quelconque des revendications précédentes, **caractérisé en ce que** le manchon (50) comporte en outre une membrane déchirable (53) s'étendant d'un bout à l'autre d'une ouverture externe du passage (52), telle que le récipient (51) est scellé avant l'entrée de fluide dans le récipient (51).

11. Récipient (51) selon la revendication 10, **caractérisé en ce que** la membrane (53) est déchirable par un moyen de fourniture, le moyen de fourniture pouvant venir en prise avec le manchon (50) avant rupture de la membrane déchirable (53) pour assurer une distribution aseptique d'un fluide dans le récipient (51).

12. Récipient (51) selon l'une quelconque des revendications 1 à 11, **caractérisé en ce que** la plage de scellement (59) et une couche thermoplastique de la membrane scellable (61) sont formées à partir de matériaux thermoplastiques adaptés à fondre et à former ledit joint à une température située dans la plage comprise entre 100 °C et 265 °C.

13. Récipient (51) selon l'une quelconque des revendications précédentes, **caractérisé en ce que** la plage de scellement (59) et une couche thermoscellable de la membrane scellable (61) sont formées à partir de matériaux thermoplastiques adaptés à fondre et à former ledit joint à une température comprise entre 130 °C et 200 °C.

14. Récipient (51) selon l'une quelconque des revendications précédentes, **caractérisé en ce que** la plage de scellement (59) comporte une pluralité de projections annulaires thermodéformables (64) en relation espacée.

15. Récipient (51) selon l'une quelconque des revendications précédentes, **caractérisé en ce que** la projection thermodéformable (64) possède un profil surélevé trapézoïdal ou incurvé.

16. Récipient (51) selon l'une quelconque des revendications précédentes, **caractérisé en ce que** le manchon (50) est de forme globalement annulaire et l'au moins une projection déformable (64) de la plage de scellement (59) s'étend circonférentiellement autour du passage, définissant un bord de coupe avant déformation.

17. Récipient (51) selon l'une quelconque des revendications précédentes, **caractérisé en ce que** la projection thermodéformable (64) est conformée de manière à chasser les fibres et/ou les particules du fluide du joint continu.

18. Récipient (51) selon l'une quelconque des revendications précédentes, **caractérisé en ce que** la membrane scellable (61) est fixée partiellement au manchon (50) dans un état pré-scellé de sorte qu'un fluide peut passer entre la plage de scellement (59) et la membrane scellable (61).

19. Procédé permettant de sceller le manchon (50) d'un récipient (51), le procédé comprenant les étapes consistant à :
fournir un récipient (51) possédant des parois avant et arrière (54, 56) définissant une chambre et un manchon (50) supporté sur la paroi avant (54), le manchon (50) ayant une première extrémité, une seconde extrémité et un passage (52) à travers celui-ci, le manchon (50) incluant une plage de scellement (59) à l'intérieur du récipient (51) pour recevoir une membrane thermoscellable (61) qui est agencée pour être thermoscellée sur la plage de scellement (59) le long d'un joint continu, ladite plage de scellement (59) dans l'état pré-scellé, incluant au moins une projection (64) ayant un profil surélevé pour fournir une zone chaude ou de fusion initiale d'aire réduite par rapport à l'aire de la plage de scellement (59) ;
fournir une membrane thermoscellable (61) adjacente à la plage de scellement (59) et s'étendant au-dessus du passage du manchon (50) ;
et appliquer de la chaleur à la membrane thermoscellable (61) à travers la paroi arrière (56) du récipient (51) en utilisant un moyen de chauffage, et pousser l'une vers l'autre la membrane thermoscellable et la plage de scellement (59) ;
dans lequel la projection déformable (64) est configurée de sorte que lors de la venue en butée avec la membrane thermoscellable (61), la projection déformable (64) et une couche thermoplastique de la membrane scellable (61) sont fondues, formant un joint entre la membrane thermoscellable (61) et la plage de scellement (59) de façon à sceller le passage.

20. Procédé selon la revendication 19, **caractérisé en ce que** la projection thermodéformable (64) est conformée de manière à chasser les fibres et/ou les particules du fluide du joint continu.

21. Procédé selon la revendication 19 ou 20, **caractérisé en ce que** le moyen de chauffage fournit de l'énergie thermique par conduction et/ou convection à la projection déformable (64) et à la membrane scellable (61).

22. Procédé selon la revendication 21, **caractérisé en ce que** le moyen de chauffage chauffe la projection déformable (64) et la membrane scellable (61) par énergie de frottement ou énergie ultrasonore.

23. Procédé selon l'une quelconque des revendications 19 à 22, **caractérisé en ce que** l'étape de fourniture d'une membrane thermoscellable (59) comporte la fourniture de la membrane thermoscellable (59) partiellement fixée au manchon (50).

24. Procédé selon l'une quelconque des revendications 19 à 23, **caractérisé en ce que**, avant l'étape d'application de chaleur à la membrane thermoscellable (59) par l'intermédiaire de la paroi arrière (56) du récipient (51), le procédé comporte l'étape consistant à :
transmettre un fluide dans la chambre à travers le manchon (50) et entre la plage de scellement (61) et la membrane scellable (59).
